# EUROPÄISCHE PATENTSCHRIFT

(11) **EP 0 591 625 B1**
(45) Veröffentlichungstag und Bekanntmachung des Hinweises auf die Patenterteilung: **06.03.1996**
(21) Anmeldenummer: 93110664.5
(22) Anmeldetag: 02.07.1993
(51) Int. Cl.: B09B 3/00, A61L 11/00, C05F 9/00

(54) **Vorrichtung zur Regenerierung und Sterilisierung von Erde**
Device for the regeneration and sterilization of soil
Dispositif pour le régénération et la stérilisation des sels

(30) Priorität: 08.10.1992 DE 9213599 U
(43) Veröffentlichungstag der Anmeldung: 13.04.1994
(73) Patentinhaber: KIEFL KG, D-82131 Gauting (DE)
(72) Erfinder: Kiefl, Rudolf, c/o Kiefl KG, D-82131 Gauting (DE)
(74) Vertreter: Hering, Hartmut, Dipl.-Ing.

(56) Entgegenhaltungen:
- EP-A- 0 277 507
- WO-A-90/12602
- WO-A-91/18672
- DE-A- 2 550 142
- DE-A- 3 809 115
- DE-U- 9 112 202

## Beschreibung

Die Erfindung bezieht sich auf eine Vorrichtung zur Regeneration und Sterilisierung von Erde, insbesondere Komposterde oder dergleichen, bei welcher Dampf eingesetzt wird.

Erde, insbesondere Komposterde oder dergleichen, enthält unter anderem Krankheitserreger, Pilze, Mikroorganismen und dergleichen, sodaß eine solche Erde nicht unmittelbar beispielsweise zur Pflanzenaufzucht und für Setzlinge eingesetzt werden kann. Zur Abtötung von Pilzen, Krankheitserregern und dergleichen in der Komposterde wurden bisher chemische Zusatzmittel eingesetzt, was heutzutage nicht mehr erlaubt ist.

In DE-A-25 50 142 ist eine Vorrichtung zum Desinfizieren und/oder Sterilisieren von zumindestens teilweise aus Feststoffen bestehendem Gut, insbesondere Feststoffe mitführenden Abwässern bekannt. In einem länglichen Behandlungsraum ist drehbar eine Rohrschnecke angeordnet, welche zur Beheizung an einem Ende an eine Dampfzuleitung und am anderen Ende an eine Dampfableitung angeschlossen sein kann. Das zu behandelnde Gut wird über einen Einlauf in den Behandlungsraum eingeleitet, und vor dem Eintritt in den Behandlungsraum kann über Düsen eine Dampfbeaufschlagung des zu behandelnden Guts erfolgen. In den Behandlungsraum selbst wird kein Dampf eingeleitet.

Aus DE-U-91 12 202.3 ist eine Vorrichtung zum Desinfizieren und Sterilisieren von infektiösem Krankenhausmüll mit strömendem Sattdampf bekannt. Im Behandlungsraum ist eine Desinfektionsschnecke angeordnet, welche unter anderem auch als Fördermittel dient und die als solche zur Erzielung einer Desinfektion beheizbar und/oder reinigbar ist.

Aus DE-A-38 09 115 ist ein Verfahren zur Dekontaminierung von Stoffen mit Hohlschnecken-Kombination bekannt. Vorzugsweise erfolgt eine Dekontaminierung von Erdreich in einem übereinander angeordneten Hohlschnecken-System bei indirekter Beheizung, das heißt, die Schnecken sind als Hohlschnecken ausgebildet, welche von einem eigenen Wärmeträgermedium, wie Heißdampf, Sattdampf, Diphyl und so weiter oder flüssigem Natrium durchströmt und aufgeheizt werden können.

Ferner gibt es zur Regeneration von Erde, insbesondere Komposterde, eine Vorrichtung in Form einer umlaufenden Trommel, in deren Innenraum das zu behandelnde Gut chargenweise eingebracht wird und dann unter Ausführung einer Umwälzbewegung in der Trommel und Unterstützung durch Auflockerungseinrichtungen Dampf zur Sterilisierung eingeleitet wird. Wenn eine solche Charge dann behandelt ist, wird sie aus der Trommel entnommen und zur Weiterverarbeitung eingesetzt, und dann muß die Trommel wieder mit neuem Behandlungsgut beschickt werden. Eine derartige Behandlungsweise ist insbesondere aufgrund des Chargenbetriebs umständlich und zeitraubend. Ferner hat es sich gezeigt, daß bei einer solchen Behandlungsweise das Behandlungsgut zur Klumpenbildung neigt, so daß nach der Behandlung mittels Dampf noch eine Nachbehandlung in einem weiteren Behandlungsschritt erforderlich ist, um das behandelte Gut aufzulockern und die gebildeten Erdklumpen zu beseitigen.

Der Erfindung liegt die Aufgabe zugrunde, eine Vorrichtung zur Regeneration und Sterilisierung von Erde, insbesondere Komposterde oder dergleichen, mittels Dampf bereitzustellen, welche eine Behandlung auf wirtschaftliche und insbesondere kontinuierliche Weise gestattet, und die bedarfsabhängig nahezu universell einsetzbar ist.

Nach der Erfindung wird hierzu eine Vorrichtung zur Regeneration und Sterilisierung von Erde, insbesondere Komposterde oder dergl., mittels Dampf nach Patentanspruch 1 bereitgestellt.

Bei der erfindungsgemäßen Vorrichtung hat es sich in überraschender Weise gezeigt, daß man eine zuverlässige Sterilisierung und Regeneration von Erde als Behandlungsgut auf kontinuierliche Weise dadurch erhält, daß das zu behandelnde Gut im Behandlungsraum mittels einer Schnecke von der Eintrittsseite zur Austrittsseite befördert wird und hierbei während des Durchgangs durch den Behandlungsraum mit Dampf über Dampfeinleitungsöffnungen beaufschlagt wird, wobei der Dampf das Behandlungsgut in dem Behandlungsraum derart durchsetzt, daß in zuverlässiger Weise Krankheitserreger, Pilze oder dergleichen abgetötet werden, sodaß die von der Austrittsseite des Behandlungsraums kontinuierlich austretende und mittels Dampf sterilisierte Erde zur Wiederverwendung genutzt werden kann. Durch das kontinuierliche Arbeiten der erfindungsgemäßen Vorrichtung wird eine wirtschaftliche Regeneration von Erde, insbesondere Komposterde, ermöglicht, welche eine preisgünstige Wiederverwertung, insbesondere auch für Gartenbau- und Gärtnereibetriebe gestattet.

Die Anzahl der Dampfeinleitungsöffnungen pro Längeneinheit in einer sich an die Eintrittsseite anschließenden Zone ist größer als im Bereich der Austrittsseite. Es erfolgt somit eine verstärkte Dampfbeaufschlagung des Behandlungsgutes im Anschluß an das Einbringen in den Behandlungsraum, sodaß zu Beginn der Behandlung eine größere Menge Dampf als am Ende der Behandlung, d. h. in der Nähe der Austrittsseite des Behandlungsraumes, in das zu behandelnde Gut eingebracht wird, wobei der Dampf während der Förderung von der Eintrittsseite zur Austrittsseite des Behandlungsraumes vom Behandlungsgut mitgeführt wird und so effektiv während der Förderung und Behandlungszeit derart auf das Gut wirken kann, daß die Krankheitserreger, Pilze oder dergleichen, zuverlässig abgetötet werden.

Gemäß einer bevorzugten Verwirklichungsform der Vorrichtung ist der Abstand zwischen jeweils zwei in Längsrichtung des Behandlungsraumes benachbarten Dampfeinleitungsöffnungen in der sich an die Eintrittsseite anschließenden Zone kleiner als im Bereich der Austrittsseite. Natürlich läßt sich die unterschiedliche Intensität der Dampfbeaufschlagung des zu behandelnden Guts auch auf andere Weise beispielsweise dadurch erreichen, daß man unterschiedlich große Dampfeinleitungsöffnungen in den jeweils zugeordneten Bereichen wählt.

Vorzugsweise ist bei der erfindungsgemäßen Vorrichtung der Behandlungsraum unter einem Winkel zur Horizontalen derart angeordnet, daß die Austrittsseite höher als die Eintrittsseite liegt, wobei der Winkel beispielsweise in einem Bereich von 10 bis 60°, vorzugsweise in einem Bereich von etwa 20 bis 40° liegt, und insbesondere der Winkel etwa 30° beträgt. Bei dieser Auslegungsform der Vorrichtung wirkt die Schwerkraft des zu behandelnden Guts selbst der Förderbewegung der Schnecke im Behandlungsraum entgegen, wodurch sich eine ausreichende Durchmischung und Auflockerung selbsttätig ergibt, so daß der über die Dampfeinleitungsöffnungen in den Behandlungsraum eintretende Dampf vollständig und zuverlässig das Behandlungsgut im Behandlungsraum gleichmäßig erfassen kann und zugleich hierdurch auch Klumpenbildungen wirksam verhindert werden.

Bei einer bevorzugten Ausführungsform nach der Erfindung ist die Schnecke als Hohlschnecke ausgebildet und die Dampfeinleitungsöffnungen sind in der Wandfläche der Hohlschnecke vorgesehen. Bei dieser Ausgestaltungsform wird der Dampf zur Regeneration und Sterilisierung der Erde über die Dampfeinleitungsöffnungen unmittelbar in der Außenwand der Hohlschnecke zugeleitet, wobei der Dampf dann von innen in Richtung nach außen sich im Behandlungsgut im Behandlungsraum ausbreiten kann.

Gemäß einer alternativen Ausgestaltungsform nach der Erfindung sind die Dampfeinleitungsöffnungen in der Wand des Behandlungsraums vorgesehen. Bei dieser Ausgestaltungsform läßt sich somit eine massive Schnecke als Förderschnecke im Behandlungsraum einsetzen, und die Dampfbeaufschlagung des zu behandelnden Guts im Behandlungsraum erfolgt in bevorzugter Richtung von außen nach innen. In Abhängigkeit von dem Anwendungsfall können zur Behandlung des Guts im Behandlungsraum auch beide Versionen als Kombination verwirklicht werden, wobei die Hohlschnecke Dampfeinleitungsöffnungen hat, welche von innen nach außen im Behandlungsraum wirken, während in der Wand des Behandlungsraumes weitere Dampfeinleitungsöffnungen vorgesehen sind, über die die Dampfbeaufschlagung bevorzugt in Richtung von außen nach innen im Behandlungsraum erfolgt.

Eine besonders zweckmäßige Ausgestaltungsform der Vorrichtung nach der Erfindung zeichnet sich dadurch aus, daß der Behandlungsraum ein von einem Rohr gebildeter Zylinderraum ist und die Dampfeinleitungsöffnungen in der Mantelfläche an diametral gegenüberliegenden Stellen angeordnet sind. Durch die kreisförmige Ausbildung des Querschnitts des Behandlungsraumes wird ein wirksames Zusammenarbeiten mit der darin angeordneten Schnecke erreicht, wobei sich insbesondere Toträume vermeiden lassen, in welchen sich unbehandeltes Gut ansammeln könnte. Bei dieser Auslegungsform der Vorrichtung erhält man eine Arbeitsweise ähnlich eines Extruders, wobei sich die Behandlungsbedingungen, wie Fördergeschwindigkeit und dergleichen, insbesondere in Verbindung mit der Ausgestaltung der Schnecke sowie deren Drehzahl steuern und beeinflussen lassen.

Vorzugsweise wird oder werden die Bedampfungseinrichtung(en) jeweils von wenigstens einem Dampfrohr gebildet, welches in Längsrichtung der Behandlungskammer verläuft und an der Außenwand derselben angebracht ist. Wenn der Behandlungsraum von einem Zylinderraum gebildet wird, ist oder sind das oder die Dampfrohr(e) an der Außenmantelfläche des Rohrs des Zylinderraums angebracht, vorzugsweise angeschraubt. Auf diese Weise erhält man die gewünschte Dampfverteilung über die Längserstreckung des Behandlungsraumes hinweg mittels einer konstruktiv einfach ausgelegten Einrichtung.

Um die Behandlungsweisen sowie die Behandlungsdauer jeweils auf die Erfordernisse des Behandlungsgutes abstimmen zu können, ist die Schnecke vorzugsweise zum Antrieb mit einem regelbaren, vorzugsweise stufenlos regelbaren Getriebe, verbunden. Auf diese Weise läßt sich die Drehzahl der Schnecke und somit die Fördergeschwindigkeit und hiermit in Verbindung die Behandlungsdauer des Behandlungsguts im Behandlungsraum auf die jeweiligen Erfordernisse abstimmen. Das Getriebe ist vorzugsweise an der eintrittsseitigen Stirnseite des den Behandlungsraum begrenzenden Rohres angeflanscht, so daß man eine platzsparende Bauweise erhält. Auch sind dann die Bedienungseinrichtungen für die Regelung der Antriebsgeschwindigkeit der Schnecke an einer für die Bedienungsperson leicht zugänglichen Stelle angeordnet.

Vorzugsweise ist die Förderrichtung der Schnecke in Steigungsrichtung des Behandlungsraumes gerichtet, d. h. die Schwerkraft des Behandlungsgutes im Behandlungsraum wirkt der Förderbewegung entgegen, um hierdurch die Durchmischung und Auflockerung des Behandlungsgutes zu unterstützen.

Zur zweckmäßigen Beschickung der Vorrichtung wird vorzugsweise das zu behandelnde Gut an der Eintrittsseite über eine Eintrittsöffnung in der Wandfläche des Behandlungsraumes eingebracht. Zur Unterstützung des Eintrags des zu behandelnden Guts, wie der Komposterde, ist die Eintrittsöffnung vorzugsweise von einem trichterförmigen Gebilde umgeben. Hierdurch wird insbesondere eine kontinuierliche Beschickung der Vorrichtung, beispielsweise über Förderbänder, ermöglicht.

Gemäß einer besonders zweckmäßigen Ausgestaltungsform der Vorrichtung nach der Erfindung hat der Fülltrichter in einem Abstand von der Eintrittsöffnung wenigstens eine Gruppe von Dampfeintrittsöffnungen, welche Dampf in Richtung der Eintrittsöffnung richten. Mit dieser Ausgestaltung werden in kombinatorischer Weise zwei wesentliche zusätzliche Effekte erzielt. Der eine Effekt ist darin zu sehen, daß durch die Dampfeinleitung im Bereich des Fülltrichters vor dem Eintritt des zu behandelnden Guts über die Eintrittsöffnung in den Behandlungsraum eine Vorwärmung und Vorbedampfung des Behandlungsgutes im Bereich des Fülltrichters erfolgt, so daß man beispielsweise am Austrittsende der Behandlungskammer eine um 8 bis 10° Celsius höhere Temperatur des behandelten Guts erreichen kann, um eine effektivere Regenerierung und Sterilisierung der Erde mittels Dampf und ohne chemische Zusätze zu erreichen. Der zweite in Kombination auftretende Effekt ist darin zu sehen, daß durch die Dampfeinleitung im Fülltrichter mit der bevorzugten Richtung auf die Eintrittsöffnung zur Behandlungskammer im Innenraum des Fülltrichters gegenüber der Außenatmosphäre an der Oberseite des Fülltrichters ein Unterdruck und hierdurch eine Sogwirkung im Fülltrichter erzeugt wird, so daß das über den Fülltrichter eingegebene, zu behandelnde Gut selbsttätig und ohne zusätzliche Handarbeit in den Behandlungsraum gleichmäßig gelangt. Hierbei hat sich gezeigt, daß sich auf diese Weise die Effektivität der Vorrichtung und die Leistungsfähigkeit derselben steigern lassen. Ferner wird hierdurch eine kontinuierliche Beschickung des Behandlungsraums mit zu behandelndem Gut ermöglicht, und es lassen sich auch Erdmassen bearbeiten, die beispielsweise aufgrund von Feuchtigkeit zu Klumpenbildungen neigen.

In Abhängigkeit von den Verhältnissen und den Abmessungen des Fülltrichters können auch mehrere Gruppen von Dampfeintrittsöffnungen umlaufend an der Innenwandfläche des Fülltrichters vorgesehen sein, wobei sich eine Mindestanzahl von zwei Gruppen als zweckmäßig erwiesen hat, welche im Abstand voneinander vorgesehen sind. Diese Dampfeintrittsöffnungen sind an einer vorzugsweise an der Innenwandfläche des Fülltrichters umlaufenden Rohrleitung vorgesehen, an welche eine entsprechende Dampflieferquelle angeschlossen ist. Hierbei kann eine gesonderte Dampflieferquelle für die Dampfeintrittsöffnungen im Fülltrichter oder auch eine gemeinsame Dampflieferquelle für alle Bedampfungsaggregate der Vorrichtung eingesetzt werden.

Um ein Zusetzen der Dampfeintrittsöffnungen im Bereich des Fülltrichters zu vermeiden und um ein gleichmäßiges Nachrutschen des zu behandelnden Gutes im Fülltrichter zu gewährleisten, ist jeder Gruppe von Dampfeintrittsöffnungen eine Abdeckung zugeordnet, welche die Dampfeintrittsöffnungen und die umlaufende Rohrleitung hierzu verdeckt. Vorzugsweise ist die Abdeckung in Richtung der Eintrittsöffnung zum Behandlungsraum dachförmig geneigt ausgebildet, so daß das Nach-rutschen des Behandlungsgutes in Richtung der Eintrittsöffnung zum Behandlungsraum unterstützt wird.

Um die Vorrichtung unter einem Winkel zu Horizontalen aufzustellen, ist vorzugsweise ein auf dem Untergrund aufliegendes Gestell vorgesehen. Dieses Gestell kann eine höhenverstellbare Anordnung auch unter Veränderung des Neigungswinkels der Vorrichtung ermöglichen.

Gemäß einer zweckmäßigen Ausgestaltungsform nach der Erfindung ist die Vorrichtung mittels eines Fahrgestells und ggf. einer Anhängeeinrichtung beweglich, so daß die Vorrichtung zu dem jeweils gewünschten Einsatzort auf einfache Weise durch Verfahren gebracht werden kann. Hierdurch wird ein flexibler Einsatz der Vorrichtung ermöglicht, und sie kann beispielsweise mittels eines Zugfahrzeugs an den gewünschten Einsatzort gefahren werden.

Vorzugsweise hat oder haben die Bedampfungseinrichtung(en) einen Schlauchanschluß für eine Dampflieferquelle, welche am bestimmungsgemäßen Einsatzort zur Dampfbehandlung und Dampfbeaufschlagung angeschlossen wird, welche aber gesondert auch für andere Einsatzzwecke hergenommen werden kann.

Um einen möglichst energiesparenden Betrieb der Vorrichtung sowie einen Betrieb derselben weitgehend unabhängig von den Umgebungsbedingungen und der Umgebungstemperatur zu erreichen, ist der Behandlungsraum vorzugsweise außenseitig von einer Wärmeisolierung umgeben, wie sie beispielsweise von einem Wärmemantel gebildet werden kann, wenn der Behandlungsraum von einem Rohrteil gebildet wird.

Die voranstehend erläuterten Einzelheiten der Vorrichtung nach der Erfindung sind natürlich nicht als eine abschließende Aufzählung zu betrachten, sondern es sind zahlreiche Abänderungen und Modifikationen möglich, die der Fachmann im Bedarfsfall treffen wird. Insbesondere läßt sich die Anzahl der Bedampfungseinrichtungen und deren Verteilung auf die jeweilige Größe des Behandlungsraumes, insbesondere in Durchmesserrichtung desselben gesehen, wählen. Auch können bei der Vorrichtung nach der Erfindung in Abhängigkeit von den Eigenschaften des zu behandelnden Guts für die Dampfsterilisierung des Guts im Behandlungsraum nur einige der vorgesehenen Bedampfungseinrichtungen genutzt werden. Vorzugsweise wird das behandelte Gut an der Austragsseite über eine in der Wandfläche vorgesehene Öffnung ausgetragen, wobei das so behandelte und austretende Gut beispielsweise auf ein Förderband gegeben werden kann, das dann das behandelte Gut zu der jeweiligen Einsatzstelle befördert. Ggf kann unterhalb der Austrittsöffnung der Vorrichtung ein Auffangbehälter beispielsweise in Form einer Box, angeordnet werden, und die Abgabe von behandeltem Gut kann dann nach Befüllen eines Auffangbehälters zu einem weiteren, hierfür bereitstehenden Behälter umgeschaltet werden. Hierdurch wird vermieden, daß das behandelte Gut in Kontakt mit unbehandeltem Gut kommen kann.

Durch den kontinuierlichen Betrieb der Vorrichtung kann somit behandeltes Gut kontinuierlich mit gesteigerter Produktivität erzeugt werden.

Die Erfindung wird nachstehend anhand einer bevorzugten Ausführungsform unter Bezugnahme auf die beigefügte Zeichnung näher erläutet. Darin zeigt:
Figur 1 eine schematische perspektivische Ansicht einer Ausführungsform einer Vorrichtung zur Regeneration und Sterilisierung von Erde nach der Erfindung,
Figur 2 eine Längsschnittansicht der Behandlungsvorrichtung beispielsweise entlang der Schnittlinie II-II in Figur 3,
Figur 3 eine Schnittansicht entlang der LInie III-III in Figur 2,
Figur 4 eine Schnittansicht einer Ausführungsvariante einer Behandlungsvorrichtung, wobei die Schnittebene ähnlich wie bei Figur 3 gewählt ist, und
Figur 5 eine Teillängsschnittansicht einer alternativen Ausführungsform einer Behandlungsvorrichtung mit einer Hohlschnecke.

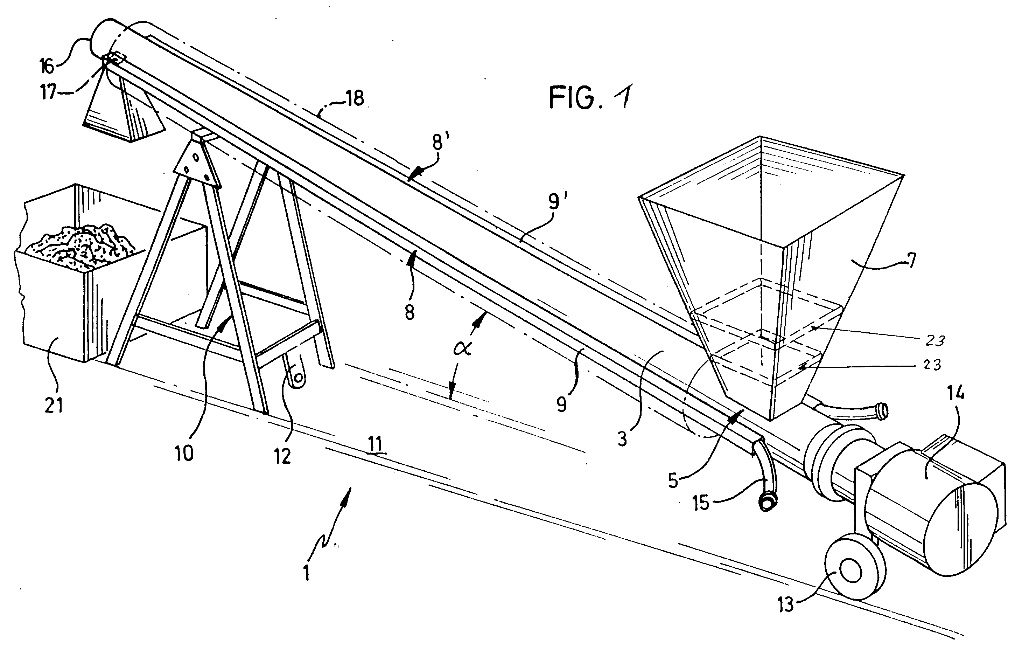

Anhand den Figuren 1 bis 3 wird ein bevorzugtes Ausführungsbeispiel einer insgesamt mit 1 bezeichneten Vorrichtung zur Regeneration und Sterilisierung von Erde, insbesondere Komposterde oder dergleichen, mittels Dampf näher erläutert.

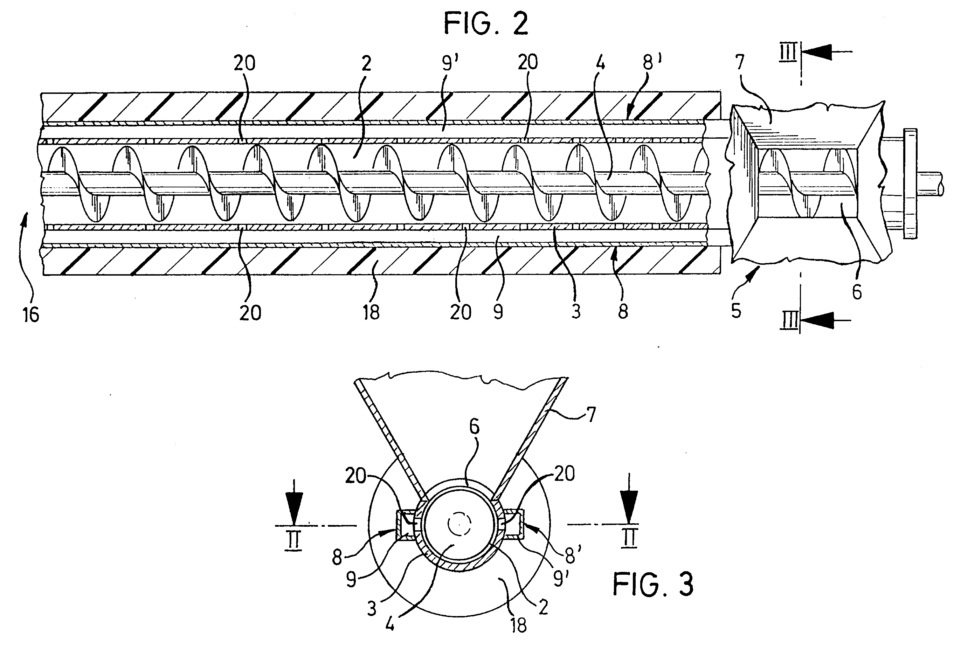

Wie gezeigt, weist die Vorrichtung 1 einen zylinderförmigen Behandlungsraum 2 auf, welcher von einem Rohrstück 3 begrenzt wird. Wie insbesondere aus Figur 2 zu ersehen ist, hat das Rohrstück 3 einen geringfügig größeren Innendurchmesser als der Durchmesser einer Schnecke 4, welche im Behandlungsraum 2 angeordnet ist und beispielsweise eine Drehbewegung in Uhrzeigerrichtung, wie mit dem Pfeil in Figur 2 angedeutet, ausführt.

An einer Eintrittsseite 5 des Behandlungsraumes 2 ist in der Mantelfläche des Rohrstücks 3 eine Eintrittsöffnung 6 (siehe Figur 2) vorgesehen, welche von einem Fülltrichter 7 umgeben ist, um das Beschicken der Vorrichtung 1 mit Behandlungsgut zu vereinfachen. Diese Eintrittsöffnung 6 ist in der Nähe des in Figur 1 rechts liegenden Endes des Behandlungsraums 2 vorgesehen.

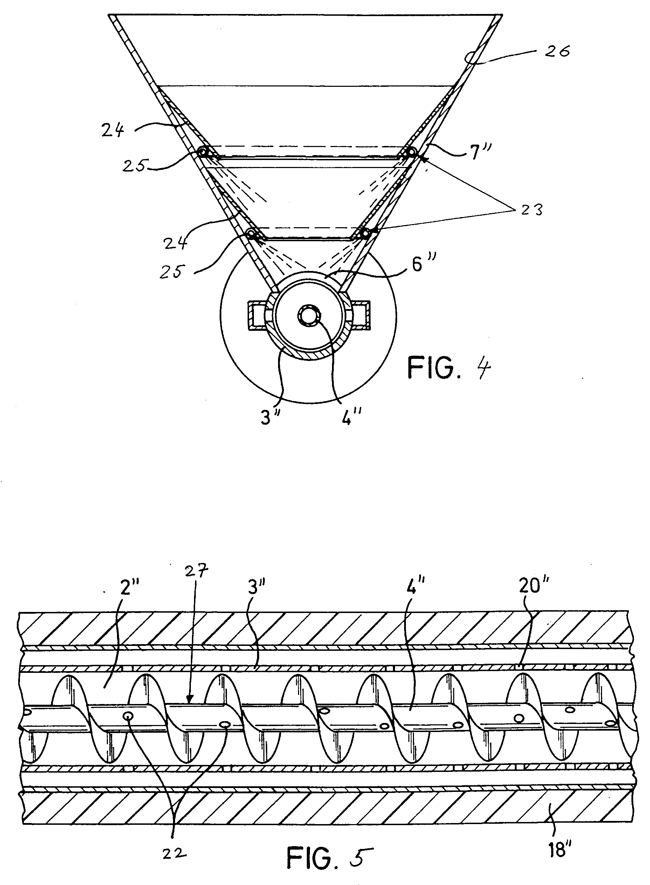

Wie in Figur 1 mit gebrochenen Linien eingetragen ist und in Figur 4 in einer Schnittansicht näher verdeutlicht ist, sind an einer Innenwandfläche 26 des Fülltrichters 7, welcher zur Unterscheidung in Figur 4 mit dem Bezugszeichen 7'' versehen ist, in einem Abstand von der Eintrittsöffnung 6'' in den Behandlungsraum 2, 2'' beispielsweise zwei umlaufende Rohr-leitungen 23 verlegt. Diese beiden gezeigten Rohrleitungen 23 haben zueinander einen Abstand. In jeder umlaufenden Rohrleitung 23 sind mehrere Dampfeintrittsöffnungen 25 vorgesehen, welche wie in Figur 4 mit gebrochenen Linien angedeutet, einen Dampfstrahl in Richtung der Eintrittsöffnung 6'' zum Behandlungsraum 2, 2'' richten. Durch diese im Bereich des Fülltrichters 7, 7'' erzeugten und in dieser Weise gerichteten Dampfströme wird im Mittelbereich des Fülltrichters 7, 7'' insbesondere in der Nähe der Eintrittsöffnung 6, 6'' gegenüber der Außenumgebung eine Unterdruck erzeugt, so daß das zu behandelnde Gut unter Unterstützung durch eine hierdruch verursachte Saugwirkung oder Sogwirkung in Richtung der Eintrittsöffnung 6, 6'' gefördert wird. Hierdurch wird eine gleichmäßige und kontinuierliche Beschickung des Behandlungsraumes 2, 2'' in Verbindung mit dem Fülltrichter 7, 7'' erreicht, und das zu behandelnde Gut rutscht automatisch in Richtung der Eintrittsöffnung 6, 6'' nach. Zusätzlich bewirken die Dampfströme über die Dampfeintrittsöffnungen 25 eine Vorwärmung und/oder eine Vorbehandlung des zu behandelnden Guts bereits im Bereich des Fülltrichters 7, 7''. Hierbei hat sich gezeigt, daß man durch diese Vorbehandlung und Vorwärmung um bis zu 8 bis 10° Celsius höhere Temperaturen an der Austrittsseite 16 des Behandlungsraumes 2, 2'' erhalten kann.

Natürlich können auch mehr als zwei oder weniger als zwei Gruppen von Dampfeintrittsöffnungen übereinander liegend im Inneren des Fülltrichters 7, 7'' angeordnet werden.

Um das Nachrutschen des zu behandelnden Gutes in Richtung zu der Eintrittsöffnung 6, 6'' des Behandlungsraumes 2, 2'' nicht zu behindern und um ein Zusetzen der Dampfeintrittsöffnungen 25 zu verhindern, ist wie in Figur 4 dargestellt, jeder Gruppe von Dampfeintrittsöffnungen 25 und der diesen zugeordneten umlaufenden Rohrleitung 23 eine Abdeckung 24 zugeordnet. Diese Abdeckung 24 ist in Richtung der Eintrittsöffnung 6, 6'' dachförmig geneigt ausgebildet. Durch diese Abdeckung 24 sind somit die Dampfeintrittsöffnungen 25 und die zugeordnete umlaufende Rohrleitung 23 an der Innenwandfläche 26 des Fülltrichters 7, 7'' in wirksamer Weise geschützt angeordnet.

Gleiche oder übereinstimmende Teile mit der anhand der Figuren 1 bis 3 gezeigten Ausführungsform sind in Figur 4 mit den gleichen Bezugsziffern aber zur Unterscheidung mit dem Zusatz '' versehen.

Bei dem in den Figuren gezeigten Beispielen sind zwei Bedampfungseinrichtungen 8, 8' diametral gegenüberliegend am Rohrstück 3 beispielsweise mittels Schrauben befestigt. Jede Bedampfungseinrichtung 8, 8' umfaßt ein Dampfrohr 9, 9', welches sich entlang der Längsseite des Behandlungsraumes 2, d. h. in Längsachsrichtung des Rohrstückes 3, erstreckt. Mit Hilfe eines Gestells 10 ist das Rohrstück 3 unter einem Winkel α zur Horizontalen geneigt angeordnet. Dieser Winkel α kann beispielsweise etwa 30° betragen, er kann jedoch auch größer oder kleiner gewählt werden. Das Gestell 10 liegt beim bestimmungsgemäßen Einsatz der Vorrichtung 1 auf dem Untergrund 11 auf. Wie schematisch in Figur 1 angedeutet ist, kann das Gestell 10 eine Anhängeeinrichtung 12 umfassen, mittels welcher die Vorrichtung 1 beispielsweise an eine Hängerkupplung eines nicht dargestellten Zugfahrzeugs angekoppelt werden kann, wenn das Gestell 10 in entsprechender Weise beispielsweise in Figur 1 in Gegenuhrzeigerrichtung verschwenkt wird und die horizontale Lage einnimmt. Zum Verfahren der Vorrichtung 1 kann ferner am anderen Ende der Vorrichtung 1 ein Laufrad 13 vorgesehen sein. An dem in Figur 1 rechts liegenden, stirnseitigen Ende des Behandlungsraumes 2 bzw. des Rohrstücks 3 ist ein Getriebe 14, vorzugsweise ein stufenlos regelbares Getriebe, mit einem zugeordneten Antriebsmotor angeflanscht. Über das Getriebe 14 kann die Schnecke 4 mit regelbarer Drehzahl angetrieben werden.

Ferner weist jede Bedampfungseinrichtung 8, 8' ein Schlauchanschlußteil 15, 15' auf, an welches über eine nicht dargestellte Schlauchleitung ein ebenfalls nicht dargestellter Dampferzeuger angeschlossen werden kann, welcher Dampf liefert und diesen in den vom Dampfrohr 9, 9' gebildeten Innenraum einleitet. Das einer Austrittsseie 16 der Vorrichtung 1 zugewandte Ende des jeweiligen Dampfrohrs 9, 9' ist geschlossen. Zum Austragen des in der Vorrichtung 1 behandelten Guts dient an der Austrittsseite 16 eine Austrittsöffnung 17, welche beispielsweise in der Mantelfläche des Rohrstücks 3 vorgesehen werden kann. Diese kann schlitzförmig ausgebildet sein.

Ferner ist in Figur 1 mit einer strichpunktierten Linie ein Isoliermantel 18 angedeutet, welcher um die Außenfläche des Behandlungsraumes 2 bzw. des Rohrstückes 3 angeordnet ist, um eine Wärmeisolierung des Behandlungsraumes 2 aus Energieersparnisgründen bei der Behandlung zu verwirklichen. Dieser Isoliermantel 18 kann von an sich für die Wärmeisolierung üblichen Materialien gebildet werden.

Insbesondere bezugnehmend auf die Figuren 2 und 3 sind im Bereich der Bedampfungseinrichtung 8, 8' Dampfeinleitungsöffnungen 20 vorgesehen, welche die Wandfläche des Behandlungsraums 2 bzw. des Rohrstücks 3 durchsetzen. Diese Dampfeinleitungsöffnungen 20 sind in Längsrichtung des Behandlungsraumes 2 in Abständen angeordnet. Die Auslegung ist bei dem dargestellten Beispiel derart getroffen, daß der Abstand zwischen jeweils zwei benachbarten Dampfeinleitungsöffnungen 20 in dem sich an die Eintrittsöffnung 6 an der Eintrittsseite 5 der Vorrichtung 1 anschließenden Bereich kleiner als im Bereich in der Nähe der Ausstrittsseite 16 der Vorrichtung 1 ist. Durch diese Auslegung wird erreicht, daß eine intensivere Dampfbeaufschlagung des Behandlungsgutes im Behandlungsraum 2 unmittelbar nach Eintritt im Behandlungsraum 2 als in Richtung der Austrittsseite 16 erfolgt. Durch die beispielsweise diametral gegenüberliegende Anordnung der Dampfrohre 9, 9' und der jeweiligen Dampfeinleitungsöffnungen 20 wird eine in Durchmesserrichtung des Rohrstücks 3 möglichst vollständige und gleichmäßige Dampfbeaufschlagung des Behandlungsgutes im Behandlungsraum 2 erreicht, um in wirksamer Weise Kranheitserreger, Bakterien, Pilze, Mikroorganismen oder dergleichen durch die Einwirkung des Dampfes abzutöten, ohne daß chemische Mittel hierzu eingesetzt werden.

Der Dampf wird über die Bedampfungseinrichtungen 8, 8' bei der beispielhaft dargestellten Vorrichtung 1 beispielsweise mit einem Druck von etwa 0,3 bis etwa 0,4 bar eingeleitet, und die Temperatur des Dampfes ist vorzugsweise derart gewählt, daß die Dampftemperatur im Bereich der Austrittsseite 16 noch etwa 90 bis 97° C beträgt.

In Figur 5 ist eine alternative Ausgestaltungsform einer Behandlungsvorrichtung gezeigt. Gleiche oder ähnliche Teile wie bei der voranstehend beschriebenen Ausführungsform sind in Figur 5 mit den gleichen Bezugsziffern aber zur Unterscheidung mit dem Zusatz '' versehen. Wesentlich bei dieser alternativen Ausgestaltungsform nach Figur 5 ist die Auslegung der Schnecke als eine Hohlschnecke 4''. Diese Auslegung als Hohlschnecke 4'' ist auch aus Figur 4 im Querschnitt zu ersehen. Der nicht näher gezeigte Hohlraum der Hohlschnecke 4'' ist an eine Dampflieferquelle angeschlossen, welche außerhalb der Behandlungsvorrichtung vorgesehen sein kann. In der zylindrisch ausgestalteten Wandfläche 27 der Hohlschnecke 4'' sind Dampfeinleitungsöffnungen 22 vorgesehen. Diese Dampfeinleitungsöffnungen 22 können wie die voranstehend beschriebenen Dampfeinleitungsöffnungen 20 verteilt in Längsrichtung der Behandlungskammer 2'' vorgesehen sein. Über diese Dampfeinleitungsöffnungen 22 wird Dampf in das Behandlungsgut ausgehend von Innen in Richtung nach Außen zu der Begrenzungswand des Behandlungsraums 2'' gerichtet, mittels welchem das zu behandelnde Gut regeneriert und sterilisiert wird. In Abhängigkeit vom Anwendungsfall kann es ausreichen, daß man zur Behandlung des Gutes nur eine wie in Figur 5 verdeutlichte Hohlschnecke 4'' mit Dampfeinleitungsöffnungen 22 in der Wandfläche 27 der Hohlschnecke 4'' vorsieht, während das Rohrstück 3'' beispielsweise in Abweichung von der Darstellung von Figur 5 geschlossen ausgebildet sein kann. Zusätzlich können aber wie in Figur 5 verdeutlicht, auch weitere Dampfeinleitungsöffnungen oder zusätzliche Dampfeinleitungsöffnungen 20'', welche im wesentlichen den mit 20 bei der voranstehend beschriebenen bevorzugten Ausführungsform bezeichneten entsprechen, vorgesehen sein. Über diese Dampfeinleitungsöffnungen 20'' erfolgt dann eine Dampfbeaufschlagung in der Behandlungskammer 2, 2'' in Richtung von außen nach innen. Wenn beide Dampfeinleitungsöffnungen 20'' und 22 vorgesehen sind, kann man eine verstärkte und intensivierte Bedampfung im Behandlungsraum 2, 2'' vornehmen.

Nachstehend werden die Arbeitsweise und Vorteile der vorstehend erläuterten Ausführungsformen der Vorrichtung 1 näher beschrieben.

Über den Fülltrichter 7, 7'' wird zu verarbeitende Erde, wie Komposterde, oder dergleichen beispielsweise mit Hilfe von Förderbändern eingebracht und diese gelangt in den Behandlungsraum 2, 2'', d. h. den Innenraum des Rohrstücks 3, 3''. Durch die unterstützende Sogwirkung mit den Dampfeintrittsöffnungen 25 im Bereich des Fülltrichters 7, 7'' (siehe Figuren 1 und 4) wird die zu behandelnde Erde gleichmäßig und selbsttätig in Richtung der Eintrittsöffnung 6, 6'' befördert. Durch die Drehbewegung der Schnecke 4, 4'' wird das an der Eintrittsseite 5 in den Behandlungsraum 2, 2'' eingebrachte Gut in den Figuren 1, 2 und 5 von rechts nach links in Richtung der Austrittsseite 16 befördert, wobei das zu behandelnde Gut durchmischt und aufgelockert wird. Mit Hilfe den Bedampfungseinrichtungen 8, 8' und den Dampfeinleitungsöffnungen 20, 20'' bzw. den Dampfeinleitungsöffnungen 22 in der Hohlschnecke 4'' wird in das kontinuierlich im Behandlungsraum 2, 2'' sich bewegende Behandlungsgut Dampf eingebracht, mittels welchem eine Sterilisierung erreicht wird, so daß Krankheitserreger wirksam abgetötet werden. Unter Durchgang durch den Behandlungsraum 2, 2'' von der Eintrittsseite 5 zur Austrittsseite 16 wird das Behandlungsgut kontinuierlich weiterbefördert und der über die Dampfeinleitungsöffnungen 20, 20'' und/oder 22 eingeleitete Dampf kann sich in das Gut einmischen, so daß eine wirksame und vollständige Sterilisierung des Behandlungsguts erreicht wird.

Das behandelte Gut tritt dann an der Austrittsseite 16 über die Austrittsöffnung 17 kontinuierlicch aus und kann beispielsweise auf einen Förderer, wie einen Bandförderer, gegeben werden. Die behandelte Erde läßt sich dann nach einer Abkühlung und Ablagerung beispielsweise zum Eintopfen von Setzlingen oder dergleichen nutzen. Durch das kontinuierliche Arbeiten der Vorrichtung 1 nach der Erfindung kann eine wirtschaftliche Dampfsterilisierung von Komposterde beispielsweise erreicht werden, so daß diese einer Wiederverwertung zugeführt werden kann.

Natürlich ist die Vorrichtung nach der Erfindung nicht auf die voranstehend beschriebenen Einzelheiten beschränkt, sondern es sind zahlreiche Abänderungen und Modifikationen möglich. Insbesondere läßt sich die Länge des Behandlungsraumes 2, 2'' sowie dessen Durchmesser sowie Volumen auf jeweils anwendungsspezifische Gegebenheiten abstimmen und können in entsprechender Weise gewählt werden. Auch die Auslegungsform der Schnecke 4 oder der Hohlschnecke 4'', wie die Steigung der Schnecke und die Ausgestaltung der Wendelform der Schnecke, lassen sich variieren. Durch einfache Versuche lassen sich die jeweils günstigsten Behandlungsbedingungen im Behandlungsraum 2, 2'' einstellen. Auch ist eine Abstimmung auf die Eigenschaften des zu behandelnden Gutes auf universelle und einfache Weise beispielsweise über das stufenlos regelbare Getriebe 14 für den Antrieb der Schnecke 4, 4'' möglich. Vielmehr ist es bei der erfindungsgemäßen Vorrichtung 1 wesentlich, daß das zu behandelnde Gut kontinuierlich in der Vorrichtung 1 behandelt und durch den Behandlungsraum 2, 2'' bewegt und hierbei aufgelockert und durchmischt wird, so daß man an der Austrittsseite 16 der Vorrichtung 1 eine qualitativ hochwertige Komposterde erhält, welche weitgehend von jeglichen Krankheitserregern, Pilzen oder dergleichen, befreit ist und somit als Zuchterde für den Gartenbau und bei Gärtnereibetrieben eingesetzt werden kann. Um die Vorrichtung 1 an unterschiedlichen Einsatzorten ihrem bestimmungsgemäßen Gebrauch zuführen zu können, ist die Vorrichtung 1 zweckmäßiger Weise mit Hilfe entsprechender Einrichtungen verfahrbar, so daß ein flexibler Einsatz der Vorrichtung 1 ermöglicht wird. Auch kann die Bedampfungseinrichtung 8, 8' in anderer Weise ausgelegt werden, so daß sie sich beispielsweise spiralförmig um den Außenumfang des Behandlungsraumes 2, 2'' bzw. des Rohrstückes 3, 3'' erstreckt. Hierbei können die Abstände zwischen den Windungen einer derartigen Bedampfungseinrichtung von der Eintrittsseite 5 zur Austrittsseite 16 variiert werden, um eine Dampfbeaufschlagung mit abnehmender Intensität auf vorbestimmte Weise in Richtung der Austrittsseite 16 zu verwirklichen.

Um einen Kontakt des sterilisierten und regenerierten Guts mit unbehandeltem Gut zu vermeiden, kann wenigstens ein Auffangbehälter 21 unterhalb der Austrittsöffnung 17 angeordnet werden, welcher beispielsweise kastenförmig (in Form einer Box) ausgebildet ist. Dieser Auffangbehälter 21 kann dann zum Abtransport des behandelten Guts genutzt werden. Ggf. können auch mehrere Auffangbehälter nebeneinander angeordnet werden und die Vorrichtung 1 wird nach dem Befüllen eines Auffangbehälters 21 beispielsweise so bewegt oder geschwenkt, daß die Austrittsöffnung 17 über dem nächsten zu befüllenden Auffangbehälter angeordnet ist.

### Bezugszeichen

- 1: Vorrichtung insgesamt
- 2, 2'': Behandlungsraum
- 3, 3'': Rohrstück
- 4: Schnecke
- 4'': Hohlschnecke nach Figuren 4 und 5
- 5: Eintrittsseite
- 6, 6'': Eintrittsöffnung
- 7, 7'': Fülltrichter
- 8, 8': Bedampfungseinrichtung insgesamt
- 9, 9': Dampfrohr
- 10: Gestell
- 11: Untergrund
- 12: Anhängeeinrichtung
- 13: Laufrad
- 14: Getriebe
- 15, 15': Schlauchanschlußteil
- 16: Austrittsseite
- 17: Austrittsöffnung
- 18, 18'': Isoliermantel
- 20, 20'': Dampfeinleitungsöffnungen
- 21: Auffangbehälter (kastenförmig)
- 22: Dampfeinleitungsöffnungen in Hohlschnecke 4''
- 23: umlaufende Rohleitung in Trichter 7''
- 24: Abdeckung
- 25: Dampfeintrittsöffnung im Bereich des Trichters 7''
- 26: Innenwandfläche des Trichters 7, 7''
- 27: Wandfläche von Hohlschnecke 4''

## Patentansprüche

1. Vorrichtung zur Regeneration und Sterilisierung von Erde, insbesondere Komposterde oder dergleichen, mit Dampf, welche aufweist:
- einen länglichen Behandlungsraum (2, 2''),
- eine Schnecke (4, 4''), welche im Behandlungsraum (2, 2'') zum kontinuierlichen Fördern und Durchmischen des eingebrachten zu behandelnden Guts von der Eintrittsseite (5) zur Austrittsseite (16) des Behandlungsraumes (2, 2'') angeordnet ist, und
- eine Bedampfungseinrichtung (8, 8'),
**dadurch gekennzeichnet**, daß die Bedampfungseinrichtung (8, 8') Dampfeinleitungsöffnungen (20, 20''; 22) entlang der Längserstreckung des Behandlungsraums (2, 2'') zum Einleiten von unter Druck stehendem Dampf in denselben umfaßt und daß die Anzahl der Dampfeinleitungsöffnungen (20, 20''; 22) pro Längeneinheit in einer sich an die Eintrittsseite (5) anschließenden Zone größer als im Bereich der Austrittsseite (16) ist.

2. Vorrichtung nach Anspruch 1, **dadurch gekennzeichnet**, daß der Abstand zwischen jeweils zwei in Längsrichtung des Behandlungsraumes (2, 2'') benachbarten Dampfeinleitungsöffnungen (20, 20''; 22) in der sich an die Eintrittsseite (5) anschließenden Zone kleiner als im Bereich der Austrittsseite (16) ist.

3. Vorrichtung nach Anspruch 1 oder 2, **dadurch gekennzeichnet**, daß der Behandlungsraum (2, 2'') unter einem Winkel (α) zur Horizontalen derart angeordnet ist, daß die Austrittsseite (16) höher als die Eintrittsseite (5) liegt, wobei der Winkel vorzugsweise in einem Bereich von 10° bis 60°, insbesondere in einem Bereich von 20° bis 40° liegt, und etwa 30° beträgt.

4. Vorrichtung nach einem oder mehreren der vorangehenden Ansprüche, **dadurch gekennzeichnet**, daß die Schnecke als Hohlschnecke (4'') ausgebildet ist und die Dampfeinleitungsöffnungen (22) in der Wandfläche (27) der Hohlschnecke (4'') vorgesehen sind.

5. Vorrichtung nach einem der vorangehenden Ansprüche, **dadurch gekennzeichnet**, daß die Dampfeinleitungsöffnungen (20, 20'') in der Wand des Behandlungsraums (2; 2'') vorgesehen sind.

6. Vorrichtung nach Anspruch 5, **dadurch gekennzeichnet**, daß wenigstens zwei Bedampfungseinrichtungen (8, 8') etwa an gegenüberliegenden Wandteilen des Behandlungsraumes (2; 2'') vorgesehen sind.

7. Vorrichtung nach einem der Ansprüche 5 oder 6, **dadurch gekennzeichnet**, daß der Behandlungsraum (2; 2'') ein von einem Rohr (3, 3'') gebildeter Zylinderraum ist, und die Dampfeinleitungsöffnungen (20; 20'') in der Mantelfläche an diametral gegenüberliegenden Stellen angeordnet sind.

8. Vorrichtung nach einem der Ansprüche 5 bis 7, **dadurch gekennzeichnet**, daß die Bedampfungseinrichtung(en) (8, 8') jeweils wenigstens ein Dampfrohr (9, 9') umfaßt, welches in Längsrichtung des Behandlungsraumes (2; 2'') verläuft und an der Außenwand desselben angebracht ist.

9. Vorrichtung nach einem der vorangehenden Ansprüche, **dadurch gekennzeichnet**, daß die Schnecke (4; 4'') zum Antrieb mit einem regelbaren, vorzugsweise stufenlos regelbaren Getriebe (14) verbunden ist.

10. Vorrichtung nach einem der Ansprüche 3 bis 9, **dadurch gekennzeichnet**, daß die Förderrichtung der Schnecke (4, 4'') in Steigungsrichtung des Behandlungsraumes (2; 2'') gerichtet ist.

11. Vorrichtung nach einem der vorangehenden Ansprüche, **dadurch gekennzeichnet**, daß das zu behandelnde Gut an der Eintrittsseite (5) über eine Eintrittsöffnung (6; 6'') in der Wandfläche des Behandlungsraumes (2; 2'') eintritt, welche von einem Fülltrichter (7; 7'') umgeben ist, welcher vorzugsweise in einem Abstand von der Eintrittsöffnung (6; 6'') wenigstens eine Gruppe von Dampfeintrittsöffnungen (25) hat, welche Dampf in Richtung der Eintrittsöffnung (6; 6'') richten.

12. Vorrichtung nach Anspruch 11, **dadurch gekennzeichnet**, daß die wenigstens eine Gruppe von Dampfeintrittsöffnungen (25) umlaufend an der Innenwandfläche (26) des Fülltrichters (7; 7'') angeordnet sind.

13. Vorrichtung nach einem der Ansprüche 11 oder 12, **dadurch gekennzeichnet**, daß jeder Gruppe von Dampfeintrittsöffnungen (25) eine Abdeckung (24) zugeordnet ist, welche die Dampfeintrittsöffnungen (25) und eine zugeordnete umlaufende Rohrleitung (23) verdeckt, welche vorzugsweise in Richtung der Eintrittsöffnung (6; 6'') dachförmig geneigt ausgebildet ist.

14. Vorrichtung nach einem der Ansprüche 2 bis 13, **dadurch gekennzeichnet**, daß ein auf dem Untergrund (11) aufliegendes Gestell (10) den Behandlungsraum (2; 2'') unter dem Winkel (α) zur Horizontalen hält.

15. Vorrichtung nach einem der vorangehenden Ansprüche, **dadurch gekennzeichnet**, daß die Vorrichtung (1) mittels eines Fahrgestells (10, 13) und gegebenenfalls einer Anhängeeinrichtung (12) beweglich ist.

16. Vorrichtung nach einem der vorangehenden Ansprüche, **dadurch gekennzeichnet**, daß der Behandlungsraum (2; 2'') außenseitig von einer Wärmeisolierung (18; 18'') umgeben ist.

## Claims

1. A device for the regeneration and sterilisation of soil, in particular compost or similar soil, with steam, featuring:
- an elongated treatment chamber (2, 2''),
- a screw (4, 4'') positioned in the treatment chamber (2, 2'') for the continuous conveyance and mixing of the material fed in for treatment from the inlet side (5) to the outlet side (16) of the treatment chamber (2, 2''), and
- a vaporization device (8, 8'),
characterised in that the vaporization device (8, 8') features steam inlet openings (20, 20''; 22) along the length of the treatment chamber (2, 2'') to introduce compressed steam into it and that the number of steam inlet openings (20, 20''; 22) on each longitudinal section in a zone adjacent to the inlet side (5) is greater than in the area on the outlet side (16).

2. A device in accordance with claim 1, characterised in that the distance between two neighbouring steam inlet openings (20, 20''; 22) along the treatment chamber (2, 2'') in the zone adjacent to the inlet side (5) is smaller than in the area on the outlet side (16).

3. A device in accordance with claims 1 or 2, characterised in that the treatment chamber (2, 2'') is positioned at an angle (α) to the horizontal in such a way that the outlet side (16) is higher than the inlet side (5), the angle preferably lying somewhere within a range of 100 to 60° and particularly within a range of 20° to 40°, and being 30°.

4. A device in accordance with one or more of the preceding claims, characterised in that the screw is designed as a hollow screw (4'') and that the steam inlet openings (22) are provided in the wall (27) of the hollow screw (4'').

5. A device in accordance with one of the preceding claims, characterised in that the steam inlet openings (20, 20'') are provided in the wall of the treatment chamber (2, 2'').

6. A device in accordance with claim 5, characterised in that at least two vaporization devices (8, 8') are provided on approximately opposite sections of the wall of the treatment chamber (2, 2'').

7. A device in accordance with one of claims 5 or 6, characterised in that the treatment chamber (2; 2'') is a cylindrical chamber formed by a pipe (3, 3'') and the steam inlet openings (20; 20'') are located at diametrically opposed points on the outer surface.

8. A device in accordance with one of claims 5 to 7, characterised in that the vaporization device(s) (8, 8') consist of at least one steam pipe (9, 9') which runs longitudinally along the treatment chamber (2; 2'') and is mounted on its outer wall.

9. A device in accordance with one of the preceding claims, characterised in that the driving screw (4; 4'') is connected to a variable, preferably infinitely variable change-speed gear (14).

10. A device in accordance with one of claims 3 to 9, characterised in that the direction of conveyance of the screw (4, 4'') conveyer device is upwards along the treatment chamber (2; 2'').

11. A device in accordance with one of the preceding claims, characterised in that the material to be treated enters on the inlet side (5) through an inlet opening (6; 6'') in the wall of the treatment chamber (2; 2'') which is covered by a feeding hopper (7; 7'') which preferably has at least one group of steam inlet openings (25) at a distance from the inlet opening (6; 6'') which guide steam towards the inlet opening (6; 6'').

12. A device in accordance with claim 11, characterised in that this at least one group of steam inlet openings (25) are located around the inner wall surface (26) of the feeding hopper (7; 7'').

13. A device in accordance with one of claims 11 or 12, characterised in that each group of steam inlet openings (25) has a cover (24) which covers the steam inlet openings (25) and their pipe (23) and which is preferably inclined like a roof towards the inlet opening (6; 6'').

14. A device in accordance with one of claims 2 to 12, characterised in that a frame (10) resting on the ground holds the treatment chamber (2; 2'') at an angle (α) to the horizontal.

15. A device in accordance with one of the preceding claims, characterised in that the device (1) can be moved by means of a chassis (10, 13) and where necessary a towing device (12).

16. A device in accordance with one of the preceding claims, characterised in that the outside of the treatment chamber (2; 2'') is covered by a heat insulation device (18; 18'').

## Revendications

1. Dispositif de régénération et de stérilisation de terre, en particulier de terre de compost ou analogue, à l'aide de vapeur, présentant :
- une enceinte de traitement (2, 2'') allongée,
- une vis (4, 4'') disposée dans l'enceinte de traitement (2, 2''), pour transporter en continu et mélanger intimement le produit à traiter introduit, depuis le côté entrée (5) vers le côté sortie (16) de l'enceinte de traitement (2, 2''), et
- un dispositif d'exposition à la vapeur (8, 8'),
caractérisé en ce que le dispositif d'exposition à la vapeur (8, 8') comprend des ouvertures d'introduction de vapeur (20, 20''; 22), disposées le long de la dimension longitudinale de l'enceinte de traitement (2, 2'') pour introduire de la vapeur sous pression dans celle-ci, et en ce que le nombre des ouvertures d'introduction de vapeur (20, 20''; 22) par unité de longueur dans une zone se raccordant au côté entrée (5) est supérieur à ce que l'on a dans la zone du côté sortie (16).

2. Dispositif selon la revendication 1, caractérisé en ce que l'espacement entre des ouvertures par paires d'introduction de vapeur (20, 20''; 22) voisines dans la direction longitudinale de l'enceinte de traitement (2, 2''), dans la zone se raccordant côté entrée (5) est inférieur à celui que l'on a dans la zone du côté sortie (16).

3. Dispositif selon la revendication 1 ou 2, caractérisé en ce que l'enceinte de traitement (2, 2'') est disposée sous un angle (α) par rapport à l'horizontale, de manière que le côté sortie soit situé au-dessus du côté entrée (5), l'angle (α) étant situé dans une plage allant de préférence entre 10° et 60°, en particulier dans une plage allant de 20° à 40° et faisant à peu près 30°.

4. Dispositif selon l'une ou plusieurs des revendications précédentes, caractérisé en ce que la vis est réalisée sous forme de vis creuse (4''), et en ce que les ouvertures d'introduction de vapeur (22) sont prévues dans la surface de paroi (27) de la vis creuse (4'').

5. Dispositif selon l'une des revendications prédécentes, caractérisé en ce que les ouvertures d'introduction de vapeur (20, 20'') sont prévues dans la paroi de l'enceinte de traitement (2; 2'').

6. Dispositif selon la revendication 5, caractérisé en ce qu'au moins deux dispositifs d'exposition à la vapeur (8, 8') sont prévus, à peu près dans des parties de paroi placées en regard l'une de l'autre de l'enceinte de traitement (2; 2'').

7. Dispositif selon l'une des revendications 5 ou 6, caractérisé en ce que l'enceinte de traitement (2; 2'') est une enceinte cylindrique constituée par un tube (3, 3''), et en ce que les ouvertures d'introduction de vapeur (20; 20'') sont disposées dans la surface d'enveloppe, en des endroits diamétralement opposés.

8. Dispositif selon l'une des revendications 5 à 7, caractérisé en ce que le ou les dispositifs d'exposition à la vapeur (8, 8') comprennent chacun un tube de vapeur (9, 9') qui s'étend dans la direction longitudinale de l'enceinte de traitement (2; 2'') et est monté sur sa paroi extérieure.

9. Dispositif selon l'une des revendications précédentes, caractérisé en ce que la vis (4; 4'') destinée à l'entraînement est reliée a une transmission (14) réglable sous l'action d'une régulation, de préférence progressivement.

10. Dispositif selon l'une des revendications 3 à 9, caractérisé en ce que la direction de transport de la vis (4, 4'') est orientée dans la direction de la montée de l'enceinte de traitement (2; 2'').

11. Dispositif selon l'une des revendications précédentes, caractérisé en ce que le produit à traiter entre du côté entrée (5) par une ouverture d'entrée (6; 6'') ménagée dans la surface de paroi de l'enceinte de traitement (2; 2'') qui est entourée par un entonnoir de remplissage (7; 7'') qui a de préférence, à distance de l'ouverture d'entrée (6; 6''), au moins un groupe d'ouvertures d'entrée de vapeur (25) qui dirigent la vapeur dans la direction de l'ouverture d'entrée (6; 6'').

12. Dispositif selon la revendication 11, caractérisé en ce que le au moins un groupe d'ouverture d'entrée de vapeur (25) est disposé sur le pourtour de la surface de paroi intérieure (26) de l'entonnoir de remplissage (7; 7'').

13. Dispositif selon l'une des revendications 11 ou 12, caractérisé en ce qu'à chaque groupe d'ouvertures d'entrée de vapeur (25) est associé un recouvrement (24) qui recouvre les ouvertures d'entrée de vapeur (25) et une conduite tubulaire (23) associée faisant le pourtour, qui est réalisée en toit avec une inclinaison, de préférence dans la direction de l'ouverture d'entrée (6; 6'').

14. Dispositif selon l'une des revendications 2 à 13, caractérisé en ce qu'un bâti (10) posé sur le sol (11) maintient l'enceinte de traitement (2; 2'') sous l'angle (α) par rapport à l'horizontale.

15. Dispositif selon l'une des revendications précédentes, caractérisé en ce que le dispositif (1) est déplaçable au moyen d'un bâti mobile (10, 13) et, le cas échéant, d'un dispositif de remorquage (12).

16. Dispositif selon l'une des revendications précédentes, caractérisé en ce que l'enceinte de traitement (2; 2'') est entourée du côté extérieur par une isolation thermique (18; 18'').
